# EUROPEAN PATENT SPECIFICATION

(11) **EP 4 418 420 B1**
(45) Date of publication and mention of the grant of the patent: **02.12.2026**
(21) Application number: 23880132.8
(22) Date of filing: 16.10.2023
(51) Int. Cl.: H01M 50/209, H01M 50/244, H01M 50/242, H01M 50/264, H01M 50/291

(54) **BATTERY PACK HAVING IMPROVED FIXATION STRENGTH OF ACCOMMODATED BATTERY MODULE AND DEVICE INCLUDING SAME**
BATTERIEPACK MIT VERBESSERTER FIXIERSTÄRKE EINES AUFGENOMMENEN BATTERIEMODULS UND VORRICHTUNG DAMIT
BLOC-BATTERIE AYANT UNE FORCE DE FIXATION AMÉLIORÉE D'UN MODULE DE BATTERIE LOGÉ ET DISPOSITIF LE COMPRENANT

(30) Priority: 18.10.2022 KR 20220134150; 11.10.2023 KR 20230135000
(43) Date of publication of application: 21.08.2024
(73) Proprietor: LG Energy Solution, Ltd., Seoul 07335 (KR)
(72) Inventor: YOO, Dong Won, Daejeon 34122 (KR); LEE, Young Kyu, Daejeon 34122 (KR); SON, Young Su, Daejeon 34122 (KR)
(74) Representative: Plasseraud IP
(86) International application number: PCT/KR2023/015905
(87) International publication number: WO 2024/085555

(56) References cited:
- CN-U- 215 989 048
- CN-U- 217 158 441
- JP-A- 2015 228 385
- JP-A- 2015 228 385
- KR-A- 20180 024 972
- KR-A- 20180 113 906
- KR-A- 20180 113 906
- KR-A- 20190 005 405
- KR-A- 20190 005 405
- KR-A- 20190 007 745

## Description

### [Technical Field]

This application claims the benefit of priority to Korean Patent Application No. 2022-0134150 filed on October 8, 2022 and Korean Patent Application No. 2023-0135000 filed on October 11, 2023.

The present invention relates to a battery pack with increased fixation force of a battery module received therein and a device including the same, and more particularly to a battery pack with increased fixation force of a battery module received therein configured such that fixation force of a battery module received in a pack case is increased, whereby movement of the battery module is inhibited, and therefore stability of the battery module is improved, and a device including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a battery pack used in electric bicycles, electric kickboards, etc., the battery pack may be formed to have a long length, and such a battery pack may require an appropriate distance between a battery module and the battery pack when the battery module is received in order to facilitate assembly.

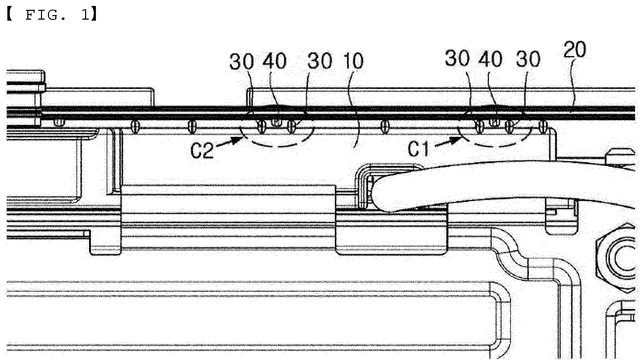

FIG. 1 is a sectional view showing a part of a conventional battery pack. As shown in FIG. 1, the conventional battery pack may include a cell assembly 10, a pack housing 20 configured to receive the cell assembly 10, an outer protrusion 30 formed on an outer surface of the cell assembly 10, and an inner protrusion 40 formed on an inner surface of the pack housing 20.

In the conventional battery pack, the outer protrusion 30 and the inner protrusion 40 are formed to fill the distance between the cell assembly 10 and the pack housing 20, thereby increasing fixation force of the cell assembly 10.

However, the height of each of the outer protrusion 30 and the inner protrusion 40 is equal to or greater than the distance between the cell assembly 10 and the pack housing 20, whereby it may not be easy to insert the cell assembly 10 into the pack housing 20, and the cell assembly may be damaged by friction generated during insertion.

### (Prior Art Document)

(Patent Document 1) Korean Patent Application Publication No. 2015-0062800
CN215989048U discloses a battery pack comprising a battery module accommodating a plurality of battery cells therein, a lower pack case having a receiving space configured to receive the battery module therein, and an upper pack case located at one surface of the lower pack case, wherein a first extension portion is formed at an outer surface of the battery module and extends parallel to the outer surface of the battery module by a predetermined length, wherein the first extension portion is spaced apart from the outer surface of the battery module, and wherein a second extension portion is formed at an inner surface of the lower pack case and extends in a direction toward the first extension portion, and wherein the second extension portion is formed parallel to a vertically extending sidewall of the lower pack case, wherein the lower pack case case includes a second receiving portion extending parallel to the second extension portion, the second receiving portion being recessed by a predetermined depth.

### [Disclosure]

### [Technical Problem]

The present invention has been made in view of the above problems, and it is an object of the present invention to provide a battery pack with increased fixation force of a battery module received therein configured such that fixation force of a battery module received in a pack case of the battery pack is increased, whereby movement of the battery module is inhibited, and a device including the same.

It is another object of the present invention to provide a battery pack with increased fixation force of a battery module received therein configured such that an insertion process is relatively easily performed when a battery module is received in a pack case and a device including the same.

### [Technical Solution]

In order to accomplish the above objects, a battery pack with increased fixation force of a battery module received therein according to the present invention includes a battery module (100) accommodating a plurality of battery cells therein, a lower pack case (200) having a receiving space configured to receive the battery module (100) therein, and an upper pack case (300) located at one surface of the lower pack case (200), wherein a first extension portion (110) is formed at an outer surface of the battery module (100) and extends parallel to the outer surface of the battery module (100) by a predetermined length, wherein the first extension portion being spaced apart from the outer surface of the battery module, and wherein a second extension portion (210) is formed at an inner surface of the lower pack case (200) or the upper pack case (300) and extends in a direction toward the first extension portion (110).

Also, in the battery pack according to the present invention, the lower pack case (200) or the upper pack case (300) includes a second receiving portion (220) extending parallel to the second extension portion (210), the second receiving portion being recessed by a predetermined depth.

Also, in the battery pack according to the present invention, the battery module (100) may include a first receiving portion (120) disposed on the outer surface of the battery module and is adjacent to the first extension portion (110), wherein the first receiving portion (120) is recessed by a predetermined depth.

Also, in the battery pack according to the present invention, each of the second extension portion (210) and the second receiving portion (220) may extend from an edge of an inner bottom surface of the lower pack case (200).

Also, in the battery pack according to the present invention, each of the first extension portion (110), the first receiving portion (120), the second extension portion (210), and the second receiving portion (220) may be located so as not to overlap each other on a vertical extension line.

Also, in the battery pack according to the present invention, the first extension portion (110) may have a first protrusion (111) protruding from an end of a surface of the first extension portion (110) facing the battery module (100).

Also, in the battery pack according to the present invention, the second extension portion (210) may include an incision portion (211) formed as a result of some area being cut.

Also, in the battery pack according to the present invention, the first extension portion (110) and the second extension portion (210) may be formed respectively on surfaces of the battery module (100) and the lower pack case (200) adjacent to each other in one or more.

Also, in the battery pack according to the present invention, each of the first extension portion (110) and the second extension portion (210) may include an elastic material.

Also, in the battery pack according to the present invention, the sum of a thickness of the first extension portion (110), a thickness of the second extension portion (210), and a thickness of the second receiving portion (220) may be equal to or greater than the distance between the battery module (100) and the lower pack case (200).

Also, in the battery pack according to the present invention, the first extension portion (110) is configured to be inserted between the second extension portion (210) and the second receiving portion (220), and the second receiving portion (220) may be configured to be inserted between the first extension portion (110) and the first receiving portion (120), whereby fixing therebetween may be achieved by fitting.

Also, in the battery pack according to the present invention, the second extension portion may be spaced apart from the inner surface of the lower pack case before the first extension portion is fixed by fitting.

In addition, the present invention provides a device having the battery pack having the aforementioned features mounted therein.

### [Advantageous Effects]

As is apparent from the above description, a battery pack with increased fixation force of a battery module received therein according to the present invention has an advantage in that a first extension portion is made of an elastic material, whereby it is possible to relatively easily insert and receive a battery module into and in a pack case.

In addition, the battery pack according to the present invention has an advantage in that the first extension portion, a second extension portion, and a second receiving portion are inserted between each other and fixed by fitting, whereby it is possible to inhibit movement of the battery module.

### [Description of Drawings]

FIG. 1 is a sectional view showing a part of a conventional battery pack.
FIG. 2 is a perspective view showing a battery pack according to a first preferred embodiment of the present invention from which an upper pack case is separated.
FIG. 3 is an enlarged perspective view showing a first extension portion and a first receiving portion in the battery pack according to the first preferred embodiment of the present invention.
FIG. 4 is an enlarged perspective view showing a second extension portion and a second receiving portion in a lower pack case according to a first preferred embodiment of the present invention.
FIG. 5 is a sectional view showing coupling between a first extension portion, a second extension portion, and a second receiving portion according to a first preferred embodiment of the present invention.
FIG. 6 is a sectional view showing coupling between a third extension portion, a fourth extension portion, and a third receiving portion according to a second preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack with increased fixation force of a battery module received therein according to the present invention and a device including the same will be described with reference to the accompanying drawings.

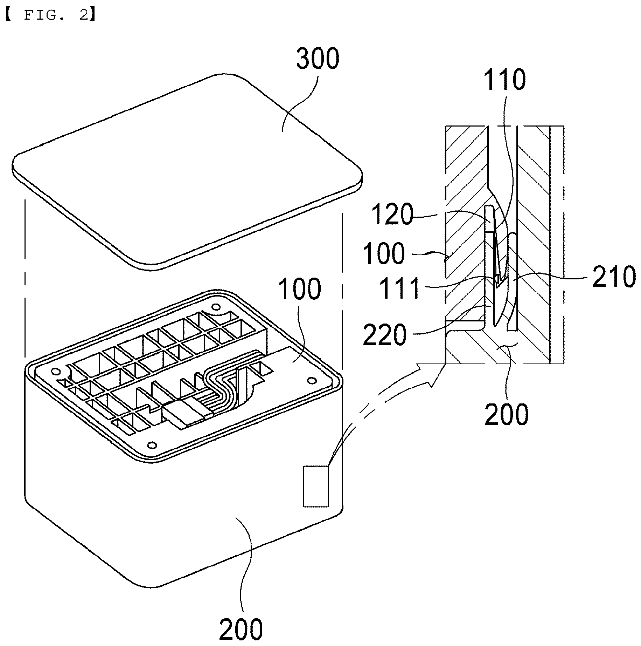

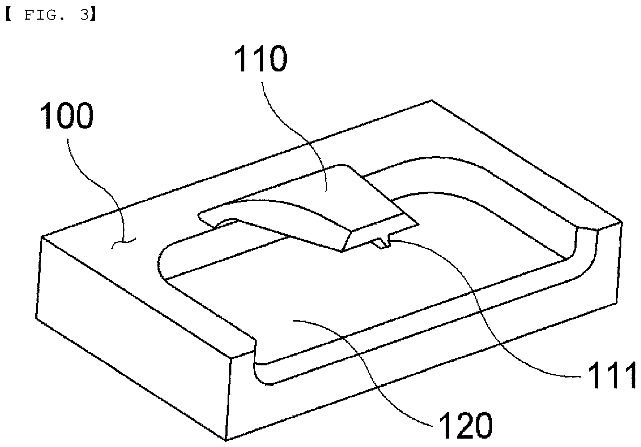

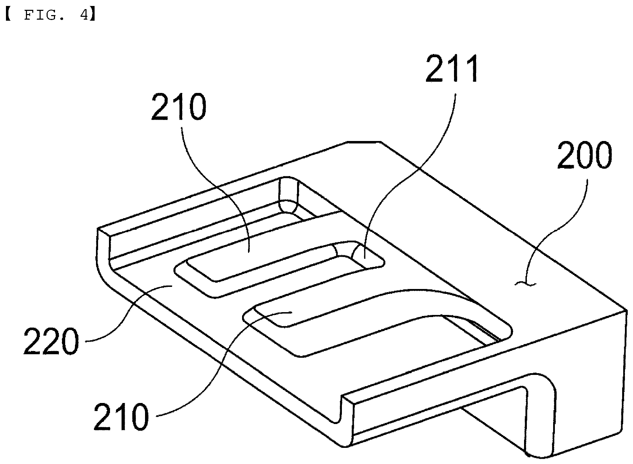

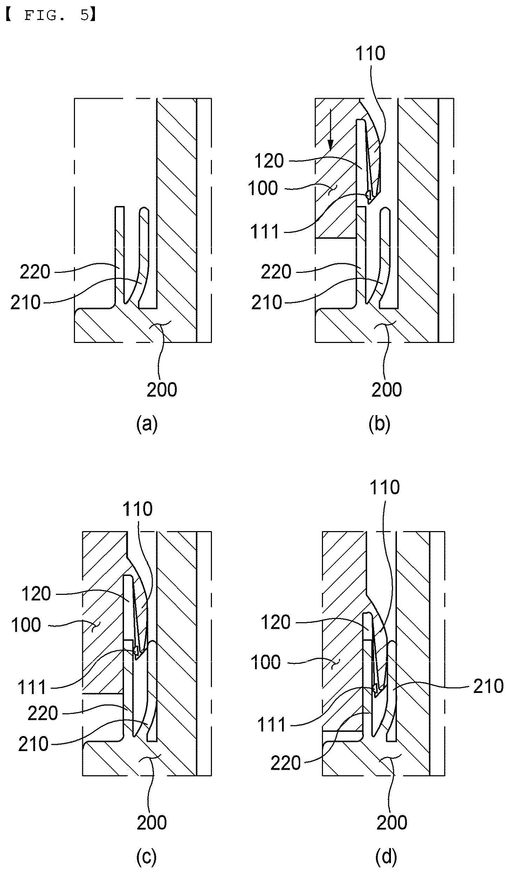

FIG. 2 is a perspective view showing a battery pack according to a first preferred embodiment of the present invention from which an upper pack case is separated, FIG. 3 is an enlarged perspective view showing a first extension portion and a first receiving portion in the battery pack according to the first preferred embodiment of the present invention, FIG. 4 is an enlarged perspective view showing a second extension portion and a second receiving portion in a lower pack case according to a first preferred embodiment of the present invention, and FIG. 5 is a sectional view showing coupling between a first extension portion, a second extension portion, and a second receiving portion according to a first preferred embodiment of the present invention.

As shown in FIGs. 2 to 5, the battery pack according to the present invention may include a battery module 100, a lower pack case 200, and an upper pack case 300.

A plurality of battery cells may be received in the battery module 100, and at least one first extension portion 110 and a first receiving portion 120 may be formed at an outer surface of the battery module 100.

Here, the battery cell includes a cell case, an electrode assembly received in the cell case, a pair of electrode tabs, a pair of electrode leads constituted by a positive electrode lead and a negative electrode lead, each of which has one side electrically connected to a corresponding one of the electrode tabs and the other side protruding out of the cell case, and an insulating film.

A receiving portion configured to receive the electrode assembly is formed in the cell case using a laminate sheet constituted by an outer covering layer, a metal layer, and an inner covering layer.

The inner covering layer is disposed in direct contact with the electrode assembly, and therefore the inner covering layer must exhibit high insulation properties and high electrolytic resistance. In addition, the inner covering layer must exhibit high sealability in order to hermetically isolate the cell case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various kinds of gas from permeating into the battery from the outside. An aluminum thin film, which is lightweight and easily shapeable, may be used as a preferred material for the metal layer.

The outer covering layer is located at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer resin layer may be made of nylon or polyethylene terephthalate; however, the present invention is not limited thereto.

Meanwhile, the electrode assembly, which is received in the cell case, may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The electrode assembly may include a positive electrode and a negative electrode, at which a positive electrode tab and a negative electrode tab are provided, respectively, wherein the pair of tabs is connected respectively to a positive electrode lead and a negative electrode lead by spot welding, etc., and the electrode leads are disposed so as to protrude out of the cell case by a predetermined length.

The insulating film is located on each of an upper surface and a lower surface of each of the pair of electrode leads, more specifically in a sealed portion of the cell case formed by thermal fusion.

A first extension portion 110 is formed on the outer surface of the battery module 100 so as to extend from the outer surface of the battery module 100 by a predetermined length.

The first extension portion 110 may be formed parallel to the outer surface of the battery module 100 in a state of being spaced apart from the outer surface of the battery module, and may be made of a material having predetermined elasticity.

The first extension portion 110 may have a first protrusion 111 protruding by a predetermined height from the end of the surface that faces the outer surface of the battery module 100.

The first protrusion 111 may prevent the first extension portion 110, which is elastic, from being deformed and brought into tight contact with the outer surface of the battery module 100.

A first receiving portion 120 having a predetermined depth may be formed in the outer surface of the battery module 100 located parallel to the first extension portion 110.

The first receiving portion 120 may define a space configured to receive a second receiving portion 220 when being brought into tight contact with the second receiving portion 220.

The lower pack case 200 may have a hexahedral shape having one surface that is open, and serves to protect the battery module 100 received therein from external impact and foreign matter.

The lower pack case 200 may be provided at an inner surface thereof with a second extension portion 210 extending from a lower surface of the lower pack case 200 in a direction toward the first extension portion 110 of the battery module 100 and a second receiving portion 220.

The second extension portion 210 may be made of an elastic material, is formed parallel to a vertically extending sidewall of the lower pack case 200, and is located between the first extension portion 110 and the sidewall of the lower pack case 200 when being brought into tight contact with the first extension portion 110.

In this case, the first extension portion 110 and the second extension portion 210 may be formed so as to face each other, and may be located such that a vertical extension line of the first extension portion 110 and a vertical extension line of the second extension portion 210 do not overlap each other.

In addition, the second extension portion 210 may be formed at an edge of a bottom surface of the lower pack case 200 so as not to overlap with a region on a vertical extension line of the battery module 100 being inserted in order to prevent damage to the second extension portion 210 due to collision between the battery module 100 and the second extension portion 210 when the battery module 100 is inserted into the lower pack case 200.

The second extension portion 210 may have an incision portion 211 formed at the end thereof as the result of a part of the area being cut, whereby the second extension portion 210 may be easily deformed, and therefore the second extension portion may be more easily inserted between the first extension portion 110 and the lower pack case 200.

In addition, the second extension portion 210 may be spaced apart from the inner surface of the lower pack case 200 before the first extension portion 110 is moved downward and brought into tight contact with the second extension portion, and when the first extension portion 110 is inserted between the second extension portion 210 and the second receiving portion 220, the second extension portion 210 and the second receiving portion 220 may be spaced apart from each other, and the second extension 210 may be brought into tight contact with the inner surface of the lower pack case 200 by fitting.

That is, the first extension portion 110 is inserted between the second extension portion 210 and the second receiving portion 220 such that the second extension portion and the second receiving portion are spaced apart from each other, whereby the space between the battery module 100 and the lower pack case 200 is filled and secured by fitting.

The second receiving portion 220 may be formed so as to extend from the edge of the bottom surface of the lower pack case 200 by a predetermined length at the position parallel to the second extension portion 210, and the second receiving portion 220 may be provided with a recess having a predetermined depth.

When the battery module 100 is inserted into and received in the lower pack case 200, the second receiving portion 220 may be located between the first extension portion 110 and the first receiving portion 120.

Here, the sum of the thicknesses of the first extension portion 110, the second extension portion 210, and the second receiving portion 220 may be equal to or greater than the distance between the lower pack case 200 and the battery module 100 received therein.

The reason for this is that, if the sum of the thicknesses of the first extension portion 110, the second extension portion 210, and the second receiving portion 220 is less than the distance between the lower pack case 200 and the battery module 100 received therein, the first extension portion 110, the first receiving portion 120, the second extension portion 210, and the second receiving portion 220 may be brought into tight contact with each other, whereby an empty space may be formed between the battery module 100 and the lower pack case 200 during fixation, and therefore fixation force may be reduced.

At this time, the first extension portion 110 may be inserted between the second extension portion 210 and the second receiving portion 220 and the second receiving portion 220 may be inserted between the first extension portion 110 and the first receiving portion 120, whereby the first extension portion 110, the first receiving portion 120, the second extension portion 210, and the second receiving portion 220 may be fixed by fitting.

The upper pack case 300, which may be flat, is located at the open surface of the lower pack case 200 and serves to hermetically seal the space in which the battery module 100 is received, thereby protecting the battery module from external impact and foreign matter.

The upper pack case 300 may be fixed by coupling between a bolt and a nut, taping, or application of an adhesive to the parts of the upper pack case 300 and the lower pack case 200 abutting each other.

In FIGs. 2 and 5, the first extension portion 110, the first receiving portion 120, the second extension portion 210, and the second receiving portion 220 are shown as being formed in a vertical direction and coupled to each other in an upward and downward direction. Depending on the position and shape of the configuration in which the first extension portion 110, the first receiving portion 120, the second extension portion 210, and the second receiving portion 220 are formed, however, the battery module 100 and the lower pack case 200, in which the battery module is received, or the upper pack case 300 may be coupled to each other in a lateral direction, a forward and backward direction, or a diagonal direction, and the direction of coupling and the direction of formation are not limited thereto as long as the movement of the battery module 100 can be inhibited.

Although not shown in the figures, the second extension portion 210 and the second receiving portion 220 formed at the lower pack case 200 may be formed at the inner surface of the upper pack case 300, as needed.

In addition, the battery pack according to the present invention may be configured such that the first extension portion 110 and the first receiving portion 120 formed at the battery module 100 are formed at the upper pack case 300 and such that the second extension portion 210 and the second receiving portion 220 formed at the lower pack case 200 are formed at the battery module 100.

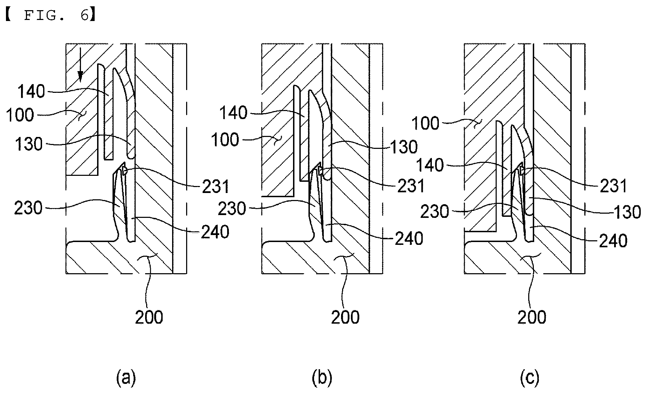

FIG. 6 is a sectional view showing coupling between a third extension portion, a fourth extension portion, and a third receiving portion according to a second preferred embodiment of the present invention.

Referring to FIG. 6, the battery pack according to the second embodiment of the present invention is identical to the battery pack according to the first embodiment described with reference to FIGs. 2 to 5 except that a third extension portion 130 and a third receiving portion 140 are formed at an outer surface of a battery module 100 and a fourth extension portion 230 and a third receiving portion 240 are formed at an inner surface of a lower pack case 200, and therefore a description of the same configuration will be omitted.

In the battery pack according to the second embodiment, the third extension portion 130 and the third receiving portion 140 may be formed at the outer surface of the battery module 100 so as to extend in a direction toward the lower pack case 200.

The third extension portion 130 may be made of an elastic material, may be formed parallel to a vertically extending sidewall of the lower pack case 200.

The third extension portion 130 may be located between the fourth extension portion 230, a description of which will follow, and an inner sidewall of the lower pack case 200 when being brought into tight contact with the fourth extension portion 230.

The third extension portion 130 may have an incision portion formed at the end thereof as the result of a part of the area being cut, as in the incision portion 211 of the first embodiment, whereby the third extension portion 130 may be easily deformed, and therefore the third extension portion may be more easily inserted between the fourth extension portion 230, a description of which will follow, and the lower pack case 200.

The third receiving portion 140 may be formed so as to extend from the outer surface of the battery module 100 by a predetermined length at the position parallel to the third extension portion 130, and the third receiving portion 140 may be provided with a recess having a predetermined depth.

The lower pack case 200 according to the second embodiment may have a fourth extension portion 230 extending from a lower surface of the lower pack case 200 by a predetermined length and a third receiving portion 240 formed in an inner surface of the lower pack case 200.

The fourth extension portion 230 may be formed parallel to the third receiving portion 240 in a state of being spaced apart from the third receiving portion 240, and may be made of a material having predetermined elasticity.

The fourth extension portion 230 may have a second protrusion 231 protruding by a predetermined height from the end of the surface that faces the inner surface of the lower pack case 200.

The second protrusion 231 may prevent the fourth extension portion 230, which is elastic, from being deformed and brought into tight contact with the third receiving portion 240 or the inner surface of the lower pack case 200.

A third receiving portion 240 having a predetermined depth may be formed in the inner surface of the lower pack case 200 located parallel to the fourth extension portion 230, and the third receiving portion 240 may define a space configured to receive the third receiving portion 140 when being brought into tight contact with the third receiving portion 140.

When the battery module 100 is inserted into and received in the lower pack case 200, the third receiving portion 140 may be located between the fourth extension portion 230 and the third receiving portion 240.

In addition, the present invention provides a device equipped with the battery pack as described above, and the device may be, for example, an electric bicycle, an electric kickboard, or an electric vehicle.

Those skilled in the art to which the present invention pertains will appreciate that various applications and modifications are possible within the category of the present invention based on the above description.

### (Description of Reference Numerals)

100: Battery module
110: First extension portion
111: First protrusion
120: First receiving portion
130: Third extension portion
140: Third receiving portion
200: Lower pack case
210: Second extension portion
211: Incision portion
220: Second receiving portion
230: Fourth extension portion
231: Second protrusion
240: Third receiving portion
300: Upper pack case

## Claims

1. A battery pack comprising:
a battery module (100) accommodating a plurality of battery cells therein;
a lower pack case (200) having a receiving space configured to receive the battery module therein; and
an upper pack case (300) located at one surface of the lower pack case,
wherein a first extension portion (110) is formed at an outer surface of the battery module and extends parallel to the outer surface of the battery module by a predetermined length, wherein the first extension portion is spaced apart from the outer surface of the battery module,
wherein a second extension portion (210) is formed at an inner surface of the lower pack case or the upper pack case and extends in a direction toward the first extension portion,
wherein the second extension portion is formed parallel to a vertically extending sidewall of the lower pack case, and is located between the first extension portion and the sidewall of the lower pack case when being brought into tight contact with the first extension portion,
wherein the lower pack case or the upper pack case includes a second receiving portion (220) extending parallel to the second extension portion, the second receiving portion being recessed by a predetermined depth, and
wherein the first extension portion is configured to be inserted between the second extension portion and the second receiving portion.

2. The battery pack according to claim 1, wherein the battery module includes a first receiving portion (120) disposed on the outer surface of the battery module and is adjacent to the first extension portion, wherein the first receiving portion is recessed by a predetermined depth.

3. The battery pack according to claim 2, wherein each of the second extension portion and the second receiving portion extend from an edge of an inner bottom surface of the lower pack case.

4. The battery pack according to claim 3, wherein each of the first extension portion, the first receiving portion, the second extension portion, and the second receiving portion are located so as not to overlap each other on a vertical extension line.

5. The battery pack according to claim 1, wherein the first extension portion has a first protrusion protruding from an end of a surface of the first extension portion facing the battery module.

6. The battery pack according to claim 1, wherein the second extension portion includes an incision portion (211) formed as a result of some area being cut.

7. The battery pack according to claim 1, wherein the first extension portion and the second extension portion are formed respectively on surfaces of the battery module and the lower pack case adjacent to each other in one or more.

8. The battery pack according to claim 1, wherein each of the first extension portion and the second extension portion include an elastic material.

9. The battery pack according to claim 3, wherein a sum of a thickness of the first extension portion, a thickness of the second extension portion, and a thickness of the second receiving portion is equal to or greater than a distance between the battery module and the lower pack case.

10. The battery pack according to claim 9, wherein
the second receiving portion is configured to be inserted between the first extension portion and the first receiving portion, whereby
fixing therebetween is achieved by fitting.

11. The battery pack according to claim 10, wherein the second extension portion is spaced apart from the inner surface of the lower pack case before the first extension portion is fixed by fitting.

12. A device having the battery pack according to any one of claims 1 to 11 mounted therein.

## Patentansprüche

1. Batteriepack, umfassend:
• ein Batteriemodul (100), in dem eine Vielzahl von Batteriezellen darin untergebracht sind;
• ein unteres Packgehäuse (200) mit einem Aufnahmeraum, der so konfiguriert ist, dass er das Batteriemodul darin aufnimmt; und
• ein oberes Packgehäuse (300), das an einer Oberfläche des unteren Packgehäuses angeordnet ist,
• wobei ein erster Verlängerungsabschnitt (110) an einer Außenfläche des Batteriemoduls ausgebildet ist und sich parallel zur Außenfläche des Batteriemoduls um eine vorbestimmte Länge erstreckt, wobei der erste Verlängerungsabschnitt von der Außenfläche des Batteriemoduls beabstandet ist,
• wobei ein zweiter Verlängerungsabschnitt (210) an einer Innenfläche des unteren Packgehäuses oder des oberen Packgehäuses ausgebildet ist und sich in einer Richtung zum ersten Verlängerungsabschnitt hin erstreckt,
• wobei der zweite Verlängerungsabschnitt parallel zu einer sich vertikal erstreckenden Seitenwand des unteren Packgehäuses ausgebildet ist und zwischen dem ersten Verlängerungsabschnitt und der Seitenwand des unteren Packgehäuses angeordnet ist, wenn er in engen Kontakt mit dem ersten Verlängerungsabschnitt gebracht wird,
• wobei das untere Packgehäuse oder das obere Packgehäuse einen zweiten Aufnahmeabschnitt (220) enthält, der sich parallel zum zweiten Verlängerungsabschnitt erstreckt, wobei der zweite Aufnahmeabschnitt um eine vorbestimmte Tiefe vertieft ist, und
• wobei der erste Verlängerungsabschnitt so konfiguriert ist, dass er zwischen dem zweiten Verlängerungsabschnitt und dem zweiten Aufnahmeabschnitt eingesetzt wird.

2. Batteriepack nach Anspruch 1, wobei das Batteriemodul einen ersten Aufnahmeabschnitt (120) enthält, der an der Außenfläche des Batteriemoduls angeordnet ist und an den ersten Verlängerungsabschnitt angrenzt, wobei der erste Aufnahmeabschnitt um eine vorbestimmte Tiefe vertieft ist.

3. Batteriepack nach Anspruch 2, wobei sich sowohl der zweite Verlängerungsabschnitt als auch der zweite Aufnahmeabschnitt von einem Rand einer inneren Bodenfläche des unteren Packgehäuses erstrecken.

4. Batteriepack nach Anspruch 3, wobei der erste Verlängerungsabschnitt, der erste Aufnahmeabschnitt, der zweite Verlängerungsabschnitt und der zweite Aufnahmeabschnitt jeweils so angeordnet sind, dass sie sich auf einer vertikalen Verlängerungslinie nicht gegenseitig überlappen.

5. Batteriepack nach Anspruch 1, wobei der erste Verlängerungsabschnitt einen ersten Vorsprung aufweist, der von einem Ende einer dem Batteriemodul zugewandten Oberfläche des ersten Verlängerungsabschnitts vorsteht.

6. Batteriepack nach Anspruch 1, wobei der zweite Verlängerungsabschnitt einen Einschnittabschnitt (211) enthält, der als Ergebnis des Schneidens eines bestimmten Bereichs ausgebildet ist.

7. Batteriepack nach Anspruch 1, wobei der erste Verlängerungsabschnitt und der zweite Verlängerungsabschnitt jeweils auf Oberflächen des Batteriemoduls und des unteren Packgehäuses, die einander benachbart sind, in einer oder mehreren Ausführungen ausgebildet sind.

8. Batteriepack nach Anspruch 1, wobei sowohl der erste Verlängerungsabschnitt als auch der zweite Verlängerungsabschnitt ein elastisches Material enthalten.

9. Batteriepack nach Anspruch 3, wobei eine Summe aus einer Dicke des ersten Verlängerungsabschnitts, einer Dicke des zweiten Verlängerungsabschnitts und einer Dicke des zweiten Aufnahmeabschnitts gleich oder größer als ein Abstand zwischen dem Batteriemodul und dem unteren Packgehäuse ist.

10. Batteriepack nach Anspruch 9, wobei der zweite Aufnahmeabschnitt so konfiguriert ist, dass er zwischen dem ersten Verlängerungsabschnitt und dem ersten Aufnahmeabschnitt eingesetzt wird, wodurch eine Befestigung dazwischen durch Passung erreicht wird.

11. Batteriepack nach Anspruch 10, wobei der zweite Verlängerungsabschnitt von der Innenfläche des unteren Packgehäuses beabstandet ist, bevor der erste Verlängerungsabschnitt durch Passung befestigt wird.

12. Vorrichtung mit einem darin montierten Batteriepack nach einem der Ansprüche 1 bis 11.

## Revendications

1. Un bloc-batterie comprenant :
un module de batterie (100) logeant une pluralité de cellules de batterie dans celui-ci ;
un boîtier de bloc inférieur (200) ayant un espace de réception configuré pour recevoir le module de batterie dans celui-ci ; et
un boîtier de bloc supérieur (300) situé au niveau d'une surface du boîtier de bloc inférieur,
dans lequel une première partie de prolongement (110) est formée au niveau d'une surface externe du module de batterie et s'étend parallèlement à la surface externe du module de batterie sur une longueur prédéterminée, dans lequel la première partie de prolongement est espacée de la surface externe du module de batterie,
dans lequel une seconde partie de prolongement (210) est formée au niveau d'une surface interne du boîtier de bloc inférieur ou du boîtier de bloc supérieur et s'étend dans une direction vers la première partie de prolongement,
dans lequel la seconde partie de prolongement est formée parallèlement à une paroi latérale s'étendant verticalement du boîtier de bloc inférieur, et est située entre la première partie de prolongement et la paroi latérale du boîtier de bloc inférieur lors de sa mise en contact étroit avec la première partie de prolongement,
dans lequel le boîtier de bloc inférieur ou le boîtier de bloc supérieur comprend une seconde partie de réception (220) s'étendant parallèlement à la seconde partie de prolongement, la seconde partie de réception étant évidée d'une profondeur prédéterminée, et
dans lequel la première partie de prolongement est configurée pour être insérée entre la seconde partie de prolongement et la seconde partie de réception.

2. Le bloc-batterie selon la revendication 1, dans lequel le module de batterie comprend une première partie de réception (120) disposée sur la surface externe du module de batterie et est adjacente à la première partie de prolongement, dans lequel la première partie de réception est évidée d'une profondeur prédéterminée.

3. Le bloc-batterie selon la revendication 2, dans lequel chacune de la seconde partie de prolongement et de la seconde partie de réception s'étend depuis un bord d'une surface inférieure interne du boîtier de bloc inférieur.

4. Le bloc-batterie selon la revendication 3, dans lequel chacune de la première partie de prolongement, de la première partie de réception, de la seconde partie de prolongement et de la seconde partie de réception sont situées de manière à ne pas se chevaucher sur une ligne d'extension verticale.

5. Le bloc-batterie selon la revendication 1, dans lequel la première partie de prolongement présente une première saillie faisant saillie depuis une extrémité d'une surface de la première partie de prolongement qui fait face au module de batterie.

6. Le bloc-batterie selon la revendication 1, dans lequel la seconde partie de prolongement comprend une partie d'incision (211) formée suite à la découpe d'une certaine zone.

7. Le bloc-batterie selon la revendication 1, dans lequel la première partie de prolongement et la seconde partie de prolongement sont formées respectivement sur des surfaces du module de batterie et du boîtier de bloc inférieur adjacentes l'une à l'autre en un ou plusieurs exemplaires.

8. Le bloc-batterie selon la revendication 1, dans lequel chacune de la première partie de prolongement et de la seconde partie de prolongement comprend un matériau élastique.

9. Le bloc-batterie selon la revendication 3, dans lequel une somme d'une épaisseur de la première partie de prolongement, d'une épaisseur de la seconde partie de prolongement et d'une épaisseur de la seconde partie de réception est supérieure ou égale à une distance entre le module de batterie et le boîtier de bloc inférieur.

10. Le bloc-batterie selon la revendication 9, dans lequel la seconde partie de réception est configurée pour être insérée entre la première partie de prolongement et la première partie de réception, ce qui permet la fixation entre celles-ci qui est réalisée par emboitement.

11. Le bloc-batterie selon la revendication 10, dans lequel la seconde partie de prolongement est espacée de la surface interne du boîtier de bloc inférieur avant que la première partie de prolongement soit fixée par emboitement.

12. Un dispositif dans lequel est monté le bloc-batterie selon l'une quelconque des revendications 1 à 11.
